# EUROPEAN PATENT SPECIFICATION

(11) **EP 0 958 975 B1**
(45) Date of publication and mention of the grant of the patent: **11.08.2004**
(21) Application number: 99303955.1
(22) Date of filing: 21.05.1999
(51) Int. Cl.: B60R 25/00, B60R 21/12, F41H 5/04, B60J 11/00

(54) **Vehicle window security guard apparatus**
Sicherheitsfahrzeugfenster
Fenêtre de sécurité pour véhicule

(30) Priority: 22.05.1998 GB 9810931
(43) Date of publication of application: 24.11.1999
(73) Proprietor: Harriman, Neil, Doncaster, South Yorkshire DN5 9LT (GB)
(72) Inventor: Harriman, Neil, Doncaster, South Yorkshire DN5 9LT (GB)
(74) Representative: Franks, Robert Benjamin

(56) References cited:
- EP-A- 0 724 060
- FR-A- 2 470 017
- GB-A- 2 115 751
- JP-A- 9 268 835
- US-A- 2 780 458
- US-A- 4 331 359

## Description

### Field of the Invention

The present invention relates to provision of means for deterring unauthorized access to vehicles such as automobiles and heavy goods vehicles. In particular, but not exclusively, the invention relates to a vehicle window security guard apparatus for substantially preventing access via a window of a land vehicle.

### Background to the Invention

Vehicle security in relation to prevention of unauthorized access to a given vehicle is of increasing concern to both vehicle manufacturers and customers. A method of protecting the windows and locks of a vehicle, effectively comprising a cover, is disclosed in European Patent Publication Number EP 0364062 for example. The cover appears to be positionable externally over the windows via manual means and thus is rendered somewhat inconvenient during times where the vehicle may be required to be left unattended for only a short time. A more manageable vehicle window security system is disclosed in International Patent Publication Number WO 95/05950 which is considered to comprise of a panel to match the opening for a window and which appears to be manually insertable from the inside of the window aperture. Although more convenient to a user than the aforementioned system this system is still relatively inconvenient for vehicles which are parked for only a short period of time because a guard would have to be inserted manually over each window of the vehicle.

Another vehicle window security system is disclosed in GB Patent application number 2255756. The first embodiment comprises roof rack mounted barriers which may be moved from a raised position to a lowered position. This system is rather cumbersome and does not seek to conceal the barriers from sight. Furthermore, the barriers, being located on the outside of the vehicle, in both the in use position and out of use position, are prone to unwanted tampering and in their in-use position do not appear to cover the whole of a given window aperture. GB 2255756 also discloses a protective inner window glass shield which may be glued to the window glass. This latter system may be considered similar to security systems simply utilising strengthened glass such as laminated glass commonly used for windscreens. However, a disadvantage of such systems is that in an emergency, since the glass is toughened or protected, it is rendered extremely difficult to break a given window so as to provide a means of escape to an occupant of a given vehicle. This is considered to be particularly in relation to high speed impact accidents wherein a given automobile's doors and windows may jam or wherein a given vehicle is accidentally submerged in water or wherein, for example, a petrol tank explosion occurs. In all such situations, for safety reasons, it is required to enable occupants to be able to leave a vehicle via the window apertures and also to enable the emergency services to access the vehicle via the window apertures. In the case of entry by emergency services, because two forms of glass are commonly used on road vehicles, those being laminated glass for windscreens (otherwise known as float glass) and tempered toughened safety glass (normal side window glass), then an additional danger is presented to the occupants of a vehicle since a given window may be smashed (using a sledge hammer, for example) in the belief that the window is made of laminated glass when in fact it may not be; breaking of a non-laminated window with a sledge hammer is considered to be particularly dangerous to occupants of the vehicle since the sledge hammer will effectively go straight through the window aperture and possibly harm an occupant not to mention the high speed glass fragments resulting.

GB 2115751 discloses a motor vehicle having improved anti-theft apparatus according to the preamble of Claim 1, the apparatus being located in the vehicle body and comprising a reinforced panel for positioning against a window when the panel is in use, the panel being independent of, and movable relative to, the window. The apparatus additionally comprises means for storing the panels and fixing means for fixing the shutter type panels in place when the panels are in use. Panel movement and guide means are provided for effecting a substantially pre-determined path of movement of their respective panels from the storage means to the in use position and vice versa and the panel movement and guide means enable the panel to moved independently of the window. Additionally GB 2115751 discloses that the panels may be stored and concealed in the same location of the vehicle as the means for storing them.

In conclusion, there appears to be a need for a convenient apparatus fitted to vehicles for the purposes of preventing unauthorized access whilst maintaining a high degree of convenience and safety to the owner of the given vehicle. Furthermore, there is a need for a vehicle window security guard system which does not restrict the possibility of occupants of vehicle escaping through the window aperture in the event of an emergency.

Thus there is a need for an improved security system for preventing unauthorized access via vehicle windows and in particular there is a need for such a system on automobiles.

### Summary of the Invention

According to the present invention there is provided a vehicle window security guard apparatus configurable to protect against unauthorised access to a vehicle (101) through a window aperture that is associated with a window, said apparatus being located in a vehicle body and said apparatus comprising:
a reinforced panel (102) for positioning adjacent to said window aperture when said panel is in use, said panel being substantially independent of, and moveable relative to, said window;
concealed storage means (203) configured to store and substantially conceal said panel within a substantially fixed and pre-determined location within said vehicle body when said panel is not in use;
locking means for maintaining said panel in said in-use position when said panel is in use;
panel movement and guide means (202, 204; 501-521) for effecting a substantially pre-determined path of movement of said panel from said storage means to said in use position and vice-versa, said panel movement and guide means enabling said panel to be moved independently of said window; and
means (202, 204; 501 - 521) configured to substantially store and conceal said panel movement means in substantially the same location within said vehicle body as said panel storage means;
said apparatus being characterised by further comprising:
a sensor configured to detect the presence of an object obstructing the closure of said panel and thereby prevent further movement of said security panel when said panel is returning to its in use position; and
a crash sensor configured to automatically deactivate said locking means in the event that said vehicle is crashed.

Preferably the panel movement and guide means and said locking means operate substantially automatically through electromechanical mechanisms invoked by an operator.

Alternatively, or in addition to, said invocation by said operator comprises use of a transmitted radiation signal.

Suitably, said panel movement and guide means and said locking means may operate through manual actions of an operator in respect of movement of a handle.

Preferably said movement and guide means comprises a system utilising a plurality of cogs connected by a chain, said panel being held by a plurality of slider devices attached to said chain.

Preferably said panel storage means and said panel movement and guide means are substantially located within the body paneling of said vehicle.

Suitably said apparatus is substantially located in a door of said vehicle and said panel is configured to protect a window aperture of said door.

Preferably said apparatus, when in use with said panel protecting said aperture, enables said door to be opened by an authorised user of said vehicle.

Preferably said apparatus comprises electrical means configured to deactivate the apparatus and render said panel in its out of use position.

Preferably said apparatus comprises a sensor to detect the presence of people in said vehicle, a said detection effectively deactivating said apparatus.

Preferably said panel is substantially transparent.

Preferably said panel comprises:
a substantially impact resistant plastics based substrate; and
a metallic mesh bonded to said plastics based substrate.

Suitably said plastics based substrate is made of a polycarbonate based plastics material.

Suitably for certain window apertures said panel comprises a plurality of linked panels. In this case it is preferred that said panel is configurable to be wrapped around a central access to facilitate storage of said panel.

Preferably said panel concealed storage means comprises a groove and said movement of said panel is in a plane substantially parallel with the plane of said window.

Additionally, said apparatus preferably comprises sensing apparatus configured to activate said apparatus through receiving a personalised radiation signal.

Preferably the movement of the reinforced panel is effected and controlled by electrical means. The electrical means suitably comprises a motor attached to an actuating mechanism connected to, and configured to effect motion of, the panel.

The electrical means is suitably invoked by an operator. Thus for example an operator may press a button configured to effect a motion of a given security guard panel into its in use position or to return it to its stored position. Furthermore, the electrical means is configured to be invoked in response to a condition. A suitable condition may comprise sensing apparatus receiving a personalized infra-red signal or alternatively the condition may comprise a key specific to the vehicle being inserted into a keyhole of the vehicle.

The guide means suitably comprises means for automatically effecting movement of the panel into its out of use position. The automatic movement of the panel suitably is configured to occur in response to one or more sensors detecting the vehicle experiencing a crash. Furthermore, the movement of the panel is preferably configured to stop if the panel is obstructed during movement to its in use position.

In certain applications, such as for example with luxurious cars, the security panel may be associated with a double glazed window.

Suitably the panel is made of a rigid shatterproof material and the panel is preferably substantially transparent. A transparent security panel is preferable because it enables the security panel to possibly be used when the vehicle is in motion. Furthermore, the panel is suitably substantially the size and shape of the given window being protected by the panel.

Suitably, the panel may comprise a metal mesh-like structure which in the preferred embodiment, is embedded in a plastics based polycarbonate material.

Suitably the plastics based material comprises a first layer and a second layer with the mesh being positioned in between the first and second layers. Furthermore, the plastics based material is preferably substantially heat resistant so as to resist attempts at unauthorized entry into a given vehicle by means of applying heat to the panel.

In a first preferred embodiment the panel substantially comprises a single rigid panel and the window of the vehicle is suitably a window located in a door of the vehicle. However, in certain applications, such as for example for rear windows and front windscreens of vehicles, it may be more suitable to utilize a panel which is configurable to be wrapped around a central axis to facilitate storage of the panel. Thus the panel may suitably comprise a plurality of linked panels and the panel may be thus configured as a roller shutter.

The movement of the panel between the stored position and the in use position and vice versa suitably comprises movement substantially in a plane transverse to a main plane of the vehicle.

In accordance with the present invention, a vehicle window security guard apparatus may be configured such that the security panel is placed over the inside of the vehicle window. Alternatively, the security panel may be configured to be placed in a position external to the window. By placing the security panel in a position external to the window an obvious advantage is that the window itself is substantially protected from any unwanted interference. Similarly for vehicles having double glazed windows the security panel may be placed in a position internal to, external to, or within, the window. By within it is meant inside the space formed between the two glass sheets of a double glazed window. The invention is particularly suitable to a vehicle such as an automobile, lorry truck or van. However, the invention may also have applications to other types of vehicles such as boats, military vehicles, police vehicles, public service vehicles, etc.

According to the present invention where the security panel may be in use whilst the vehicle is in motion means are incorporated for effecting placement of the panel into its out of use position during or following a crash for example.

In accordance with the present invention the locking means is configured to be automatically deactivated in the event that the vehicle is crashed. This may be achieved using a suitable sensor arrangement configured to detect a crash-related impact. This provides an advantage in that it is ensured that in the event of a crash, people are not effectively locked inside the vehicle. Similarly the movement of the security panel is preferably configured to be responsive to a sensor such that the movement is stopped, for example, in the event that a persons hand is creating an obstruction to the movement.

A structural panel configurable for use as a vehicle window security guard in accordance with the present invention comprises: a substantially impact resistant plastics based panel; and a metallic mesh bonded to the plastics based panel.

Suitably the metallic mesh is bonded to the plastics based panel by virtue of being encapsulated by the plastics based panel. In the preferred embodiment, the reinforced plastics based panel comprises a plurality of layers, the plastics based material being made of polycarbonate based plastics material. Preferably, the polycarbonate based plastics material is Lexan ® Margard ® sheet FMR5E (Formable). The metallic mesh is suitably configured in a diamond shaped pattern and the mesh itself is suitably at least 2mm thick so as to provide sufficient strength.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 schematically illustrates, in accordance with the present invention, a car comprising, for each window, vehicle window security guard apparatus;
Fig. 2 schematically illustrates a door of the car identified in Fig. 1, the door comprising a vehicle window security guard apparatus configured in accordance with the present invention;
Fig. 3A details a vehicle window security guard panel of the type identified in Fig. 1 and which comprises a laminate arrangement having a central metal mesh panel;
Fig. 3B further details the structure of the central metal mesh panel identified in Fig. 3A;
Fig. 4 schematically illustrates in cross section and in accordance with the present invention, a vehicle window security guard panel in relation to its accompanying vehicle window;
Fig. 5 schematically illustrates a vehicle window security guard movement mechanism suitable for incorporation in a door of a vehicle of the type identified in Fig. 2;
Fig. 6 schematically illustrates, in accordance with the present invention, an alternative embodiment of a vehicle window security guard apparatus, suitable for guarding a rear window (or a front window) of a vehicle;
Fig. 7 further details the vehicle window security guard apparatus identified in Fig. 6;
Fig. 8 schematically illustrates two further embodiments of a vehicle window security guard apparatus suitable for guarding a rear window of a vehicle; and
Fig. 9 schematically illustrates a lorry truck having vehicle window security guard apparatus configured in accordance with the present invention.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practised without limitation to these specific details. In other instances, well known methods and structures have not been described in detail so as not to unnecessarily obscure the present invention.

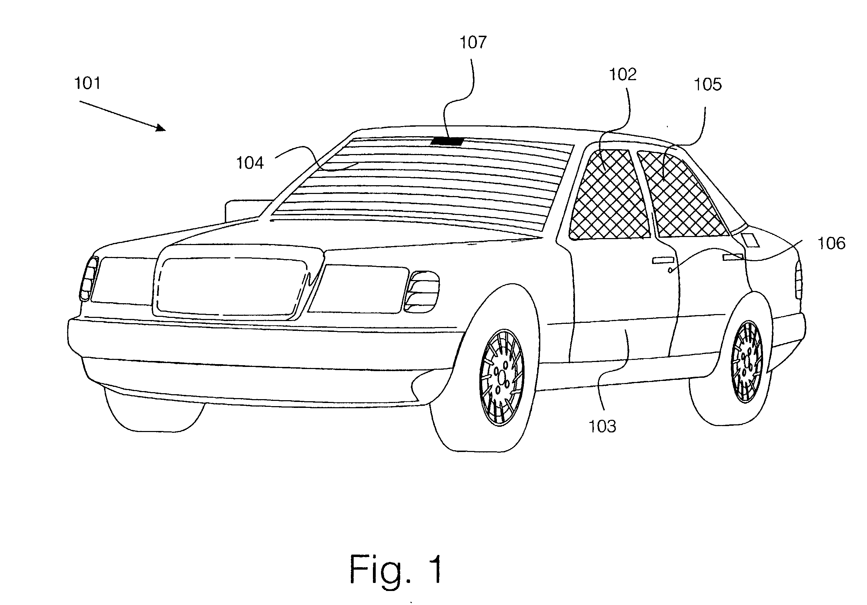

Fig. 1 schematically illustrates an automobile 101 (such as a car) comprising vehicle window security guard apparatus configured in accordance with the present invention. Fig. 1 identifies two embodiments of a vehicle window security guard apparatus, a first embodiment comprising a vehicle window security guard 102 guarding the window and window aperture of door 103 and a second embodiment comprising a vehicle window security guard 104 guarding the windscreen region of vehicle 101. A further vehicle window security guard is identified at 105 wherein the guard is configured to guard a side window aperture of the vehicle which is not located in a door of the vehicle. In the embodiments shown, the guards 102 and 105 are configured as rigid substantially transparent panels and guard 104 is configured as a roller shutter having linked elongate narrow rigid transparent panels. Transparent panels are preferred to deter criminals for example from holding people hostage in a civilian or industrial vehicle. Vehicle 101 may also comprise automatic means for effecting guided movement of the security panels from a concealed stored position in concealed storage means to an in-use position and vice versa, the guided movement being along a substantially predetermined and fixed path. By automatic means it is meant means comprising at least electrical means. Thus vehicle 101 may comprise one or more sensors configured to sense a condition such as insertion of a key specific to the vehicle, in for example, keyhole 106 of door 103. Alternatively, vehicle 101 may comprise an infra-red sensor arrangement responsive to an infra-red transmitter operated by an authorized user of the vehicle pressing a button to transmit a personalized infra-red signal to infra-red sensor 107. In the latter embodiment the personalized infra-red signal may similarly be considered to represent a condition. Thus in this way, the electrical means is invoked by an operator of the vehicle or by any person authorized to enter the vehicle. A suitable electrical means may comprise a motor attached to an actuating mechanism connected to, and configured to effect motion of, the panel. Vehicle infra-red sensing and/or key mechanisms are known to those skilled in the art of effecting movement of vehicle windows and for effecting central locking of doors, etc. Sensing technology of this kind is readily transferable for use in accordance with the present invention and since such sensing technology is well established, it will not be further described herein in relation to the present invention.

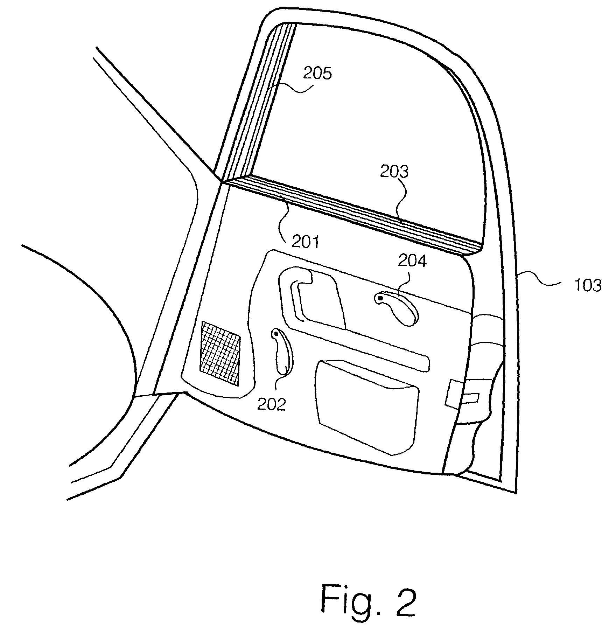

Fig. 2 further details a vehicle window security guard apparatus of the type identified in the door 103 of vehicle 101. As stated above, the vehicle window security guard may be effected automatically using infra-red signals and electrical actuating mechanisms to either an in use position or a stored position. Alternatively, the vehicle window security guard apparatus may be operated manually and a manual embodiment is detailed in Fig. 2. Door 103 comprises a groove 201, the groove comprising actuating apparatus for raising and lowering a window as is known in the art. A window located in groove 201 may be raised by an authorized user of the vehicle manually turning rotatable handle 202 to raise or lower the window as required. Handle 202 forms part of an actuating mechanism connected to the security panel. A second groove, groove 203 is located on the door in an external position with respect to groove 201. Groove 203 together with associated apparatus, located inside door 103 in accordance with the present invention, is configured to store and effect motion of a vehicle window security guard panel via an authorized user of the vehicle turning handle 204. Groove 203 together with the associated panel movement apparatus may be substantially similar to window groove 201 and its associated window movement apparatus and comprises an opening to a substantially rectangular shaped storage groove located within the vehicle door. Extending along the sides of the window orifice and at the top of the orifice is provided a groove 205 for further guiding and locating the security guard as it is raised and lowered as required. In this way the panel storage groove 203 is concealed within a fixed and predetermined location within the vehicle body and thus a given panel stored in the groove is similarly substantially concealed from sight when the panel is not positioned in its in use (raised) position.

As will be seen from looking at Figure 2, groove 203 enables the security panel to be concealed and stored within a substantially fixed and predetermined location within the vehicle body comprising the vehicle door in the example. In this way the panel may be stored in substantially the same location, that is within the body of the door, as the means for effecting movement and guidance of the panel. Movement of the panel from its storage groove is the substantially inner plane parallel to the plane of the window. In the preferred embodiment of the present invention both the panel storage means and the means for effecting movement in guidance of the panel to and from its in use position are concealed within the space formed behind the vehicle structured body panels, this being preferred in sunroof applications, door window aperture applications and in side window vehicle aperture applications. By behind it is meant underneath the outermost bodywork panel with respect to the outermost surface of the vehicle at a given location on the vehicle.

From Figure 2 and the above description it will also be clear to those skilled in the art that the panels configured in accordance with the present invention are substantially independent of the associated window, being moveable relative to the window. By "independent of' it is meant herein that the panel is a separate entity to, and is not bonded to the associated window. Thus, by being independent of the window a plurality of positions of a given panel, with respect to positions of the window, may be achieved by use of the present invention and the invention provides a more inherently safe window aperture protection system than prior art methods which simply use laminated glass in window apertures. Use of laminated glass to offer extra resistance to break in by a criminal is generally offered as an option to a customer purchasing a luxury car, but is known to provide a hazard to the occupier of a vehicle in the event of the occupier requiring exit through the windows in the event of an accident.

Movement of the security guard panel between the stored position and the in use position and vice versa suitably comprises movement substantially in a plane transverse to a main plain through the vehicle. Thus in Fig. 2, the security guard is effectively raised and lowered in a substantially vertical plane with respect to a horizontal plane through the vehicle when the vehicle is placed on a substantially horizontal surface. However, other configurations may be desirable in certain applications. Thus for example the movement of the window security guard may be configured to occur in a vertical plane, but with substantially horizontal movement (e.g. a direction moving towards the front or the back of the vehicle).

The vehicle window security guard apparatus preferably comprises means for effecting automatic movement of the panel, as described above. Furthermore, in accordance with the present invention, the automatic movement of the panel is configured to occur in response to one or more sensors detecting that the vehicle is experiencing a crash situation. A further feature includes the movement of the panel being configured to stop if the panel is obstructed during movement to its in use position. This provides protection of a given authorized user's hand (for example) not being damaged if it is accidentally placed in the path of the panel as it moves towards it's in use position.

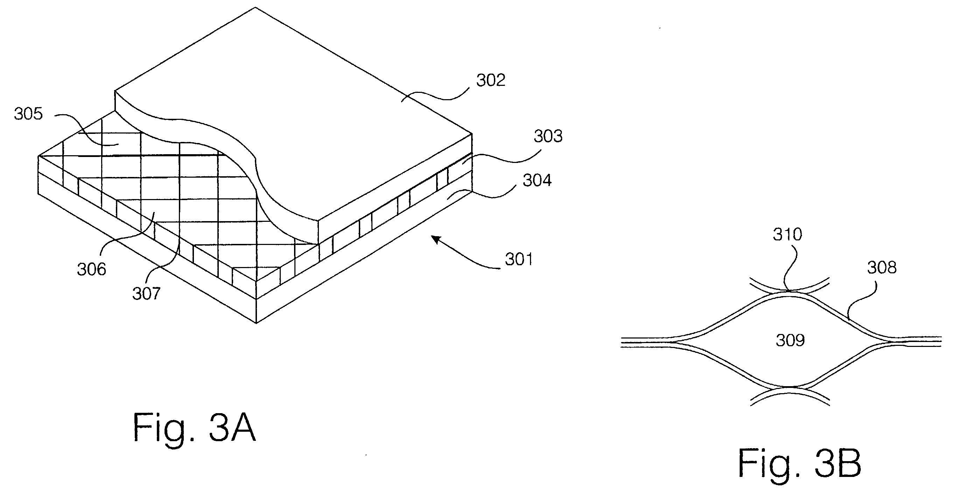

Fig. 3A, in accordance with the present invention, further details a vehicle window security guard panel and represents a first preferred embodiment of a vehicle window security guard panel. Panel 301 is substantially the shape and size of the window that it is configured to protect and may be considered to be a laminate in that it comprises three layers. A first layer, layer 302, comprises a reinforced plastics based material. Layer 302 is bonded to layer 303 which in turn is bonded to a bottom layer 304. Thus layer 303 comprising a metallic mesh is effectively sandwiched between layers 302 and 304. Layer 304 is identical to layer 302 and both are preferably transparent. Layer 303 comprises a mesh-like structure comprising holes 305,306 etc. created by a metallic framework 307. The panel embodiment 301 is thus effectively a single rigid panel arrangement formed from a plurality of layers bonded to each other. In the preferred embodiment the spaces 305,306 are substantially diamond shaped and the metallic structure 307 preferably is made of steel or aluminium having a cylindrical or rectangular cross section and being at least 2 millimetres in thickness. The spaces 305, 306 etc are not to be construed as limited to a diamond shape since other shapes may be equally suitable. Thus for example the shapes may comprise squares, rectangles, hexagons, circles, shell shapes etc or combination of shapes. Any pattern formed by a particular shape may be suitable, but a shape chosen and the size of the shape should offer sufficient transparency, this being particularly important wherein a given security panel is to be used while the vehicle is in motion. As identified in Fig. 3B the metallic structure may comprise strong solid metal material 308 surrounding spaces 309 forming a substantially repeating pattern of holes across a sheet of the material. A given metallic structure 308 forming a diamond shape is connected to neighboring similar structures via bonding arrangements such as bonding 310. Thus the individual diamond shaped elements (each forming a hole such as hole 305) may be connected to each other via welds or alternatively a given mesh-like layer of the material may be cut directly from a single piece of metal sheet for example.

A range of expanded metal meshes considered to be suitable for use in configuring the present invention are provided by the Expanded Metal Company Limited whose head sales office is based at Hartlepool, PO Box 14, Longhill Industrial Estate (North), Hartlepool, TS25 1PR, England. A wide variety of suitable meshes are detailed in leaflet No. IP44a dated February 1998. The particular metallic mesh utilized will depend upon a given manufacturers requirements together with customer preferences. Thus for example the exact type of mesh selected may depend upon the degree of security required with respect to protection of the vehicle windows. The mesh selected is required to be bonded to the plastics based panel to provide a structural panel configurable for use as a vehicle window security guard, the plastics based panel being substantially impact resistant and shatterproof. As detailed above, the plastics based panel may effectively comprise a first layer and a second layer with the mesh sandwiched in the middle. The bonding of the mesh to the plastics based panel may simply be provided by the mesh being substantially encapsulated by the plastics based material.

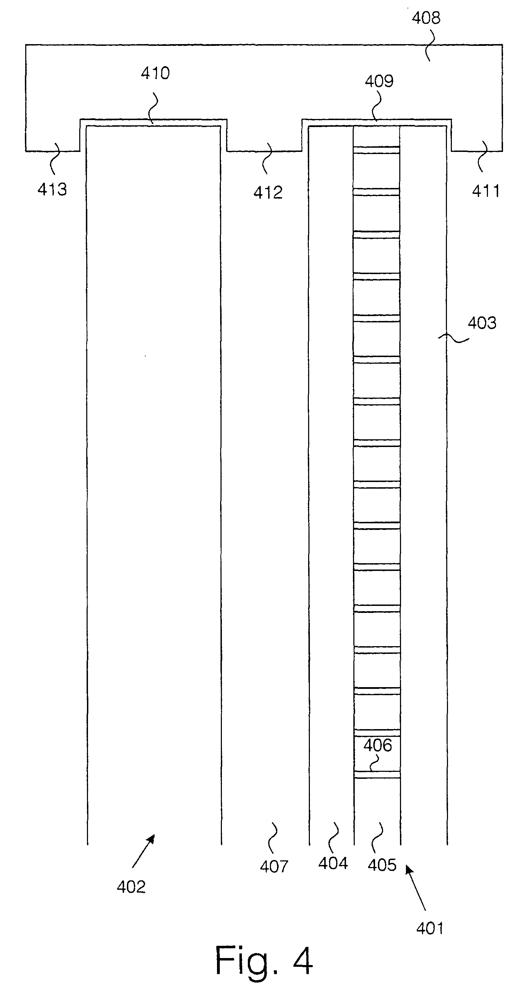

Fig. 4 schematically illustrates a cross section through a vehicle window security guard and the associated window of door 103 identified in Fig. 2. A vehicle window security guard 401 in its in use position is placed substantially parallel to and opposite window 402. Depending upon a given manufacturers requirements and/or customer requirements security guard 401 may be located on the inside of the vehicle with respect to the window or alternatively the security guard may be positioned on the outside of the vehicle with respect to the window 402. As identified in Fig. 3, the security guard 401, in the preferred embodiment, comprises a laminate arrangement. The laminate arrangement comprises an outer plastics based material layer 403, an inner plastics based material layer 404 with a metallic mesh layer 405 sandwiched in between said plastics based layers. In cross sectional end elevation view guard 401 is seen to comprise equally spaced horizontal metallic mesh portions such as portion 406. In between security guard 401 and window 402 is a relatively narrow space 407. Towards the upper end of the window and the security panel there is provided a recess arrangement 409 for locating the window and the security guard respectively. Positioning arrangement 408 comprises a first recess, that is a groove, 409 for locating security panel 401 and a second groove 410 for locating window 402. Thus the security guard is located between an outer protrusion 411 and a central protrusion 412 of locating arrangement 408. Similarly, window 402 is located in groove 410 configured between central protrusion 412 and outer protrusion 413. Locating arrangement 408 substantially forms the upper surface of a window housing. In accordance with the present invention, a security panel of the type identified may be located on the inside of a window or on the outside of a window. Furthermore, if a given vehicle window comprises a double glazed arrangement then the security panel may be located on the inside of the vehicle with respect to the window, the outside of the vehicle with respect to the window or between the two glass panels of the window.

The plastics based materials referred to are suitably shatterproof, rigid and substantially heat resistant. By heat resistant it is meant a plastics based material having a relatively high melting point so as to avoid, to as great an extent as possible, problems with unauthorized persons attempting to gain entry to a vehicle by means of heating tools being applied to a vehicle window security guard. A particularly suitable plastics based material is the polycarbonate resin type. Such materials are, for example, available from General Electric Plastics Limited of Oldhall Road, Sale, Cheshire, M33 2HG, United Kingdom. A particularly suitable material available from General Electric Plastics Limited is "Lexan ® Margard ® sheet FMR5E (Formable)" which is a transparent abrasion resistant glazing material having a dual hard coated surface for protection against wear and tear and which has an extremely high impact strength. Furthermore, the Lexan ® material has an additional desirable quality in that it is manufactured to be sufficiently resistant to a wide range of chemicals encountered in everyday use. Other materials may be available (or may become available in the future) which have superior qualities in terms of their use in configuring the present invention. Thus for example a material having enhanced heat resistance, as compared with the Lexan® material, may be more suitable for configuring a vehicle window security panel in accordance with the present invention.

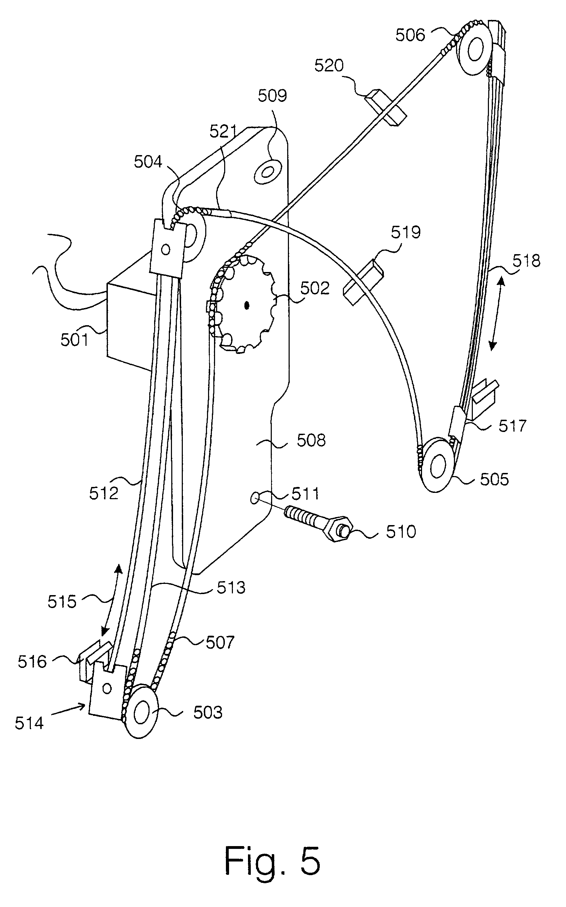

The mechanism for effecting movement of a vehicle window security guard panel from its stored position to its in use position and vice versa is detailed in Fig. 5. The mechanism detailed in Fig. 5 represents an electro-mechanical method of raising and lowering a vehicle window security guard. Thus the electrical actuating mechanism detailed in Fig. 5 is an alternative or additional mechanism to the manual mechanism identified in Fig. 2. The electrically operable apparatus for moving a window security guard panel, suitable for a window arrangement in a car door for example, comprises an electrical motor 501 (powered by the vehicle on board battery) configured to drive a panel actuating mechanism via motor 501 communicating with cog 502. Motor 501 may be controlled by an authorized user of the vehicle operating an on/off switch connected to the battery supply leads (power supply leads are not shown for the sake of clarity). Cog 502 communicates with further cogs 503, 504, 505, 506 respectively via chain 507. Cogs 503 and 504 are positioned substantially diametrically opposite cogs 505 and 506 respectively. Thus cogs 503 and 504 substantially relate to effecting movement of one side of the vehicle security guard whereas cogs 505 and 506 are configured to substantially effect movement of the diametrically opposite side of the window security guard. Motor 501 and cog 502 are located on unit 508, unit 508 substantially comprising a platform for holding these components. Platform 508 is held in place to a vehicle door (or other suitable structure for the particular window under consideration such as a wall or panel of the vehicle) via attachment means 509 and 510 for example. Thus a bolt may be inserted in hole 509 and similarly bolt 510 may be inserted in hole 511. Cogs 503 and 504 communicate with each other via chain portion 513 of chain 507 extending between the two cogs. The cogs are held in their respective positions by virtue of the cogs being attached to opposite ends of rigid member 512. Due to the action of chain 507 inter-linking with teeth on cog 503 a slider arrangement 514 is raised or lowered with respect to the fixed platform 508 as indicated by double headed arrow 515. The slider arrangement 514 comprises a means for attaching a rigid vehicle window security guard at one of its four corners. The panel attachment means 516 may be configured in a variety of ways, the embodiment shown being substantially a clip arrangement for simply clipping the vehicle window security guard into. Thus, clip 516 comprises a spring like holding arrangement having edges which locate on the upper and lower surfaces of a given vehicle window security guard. A similar sliding arrangement to that described for the left-hand side of the diagram is provided for the right hand side of the diagram. Thus cog 505 may be considered to effect movement of a slider arrangement 517 along a rigid member 518, the mechanism for this being substantially the same as that for the left-hand side of the diagram. The apparatus may be configured to "trip" the electric motor upon the vehicle window security guard being fully raised or fully lowered by virtue of stops 519 and 520. By a "stop" it is meant an attachment to chain 507 to prevent further movement of the chain in a given direction although other methods of "stopping" may be utilized and readily configured by those skilled in the art. Thus upon stop 519 moving towards cog 504, stop 519 eventually comes into contact with an electrical switching mechanism 521 which causes the motor to stop. A similar mechanism is provided for cog arrangement 506 in relation to stop 520. A single motor may be used as illustrated by virtue of chain 507 forming a loop between motor cog 502, cog 503 and cog 504 and similarly forming a second loop between motor cog 502, cog 505 and cog 506. The vehicle window security guard held by clips located on sliders 514 and 517 is held in place at its upper extremity by virtue of guiding means provided in a particular car panel that the mechanism is located in. Thus for example such guiding means may be provided by grooves such as the type illustrated in Fig. 2 at 203 and 205. The guiding means also effectively comprises the clips associated with sliders 514 and 517. Thus the arrangement identified in Fig. 5 effects positioning of a given vehicle window security guard into either its in use position or into a stored position within the given vehicle door etc.

The invention thus comprises a vehicle window security guard apparatus configurable to protect the window of a vehicle. A reinforced panel for positioning over the window when the panel is in use is provided. Storage means configured to mechanically communicate with the panel, for storing the panel when the panel is not in use is provided. Guide means for facilitating movement of the panel from the stored position to the in use position and vice versa; and locking means for maintaining the panel in the in use position when the panel is in use are also provided. By "positioning over the window" it is meant placing the panel in a position adjacent to the window so that the panel, in its in use position, is in close proximity to the window and in a plane substantially parallel to the plane of the window. Thus the window security panel may be placed in a position on the inside of the vehicle with respect to the window. Alternatively the window security panel may be placed in a position external to the window or alternatively the panel may be placed between two glass panels of a double glazed window. Similarly, the panel may be placed in its in use position in a given window aperture with the window itself stored in a position other than in the actual window aperture. By locking means it is meant a mechanism to prevent an unauthorized user of the vehicle simply pushing the security guard from its in use position to its stored position. Thus a locking mechanism suitable for an electrically driven security panel may comprise the electric motor simply being locked in a position to prevent cog 502 from being rotated. In the manual system identified in Fig. 2 a suitable locking arrangement may comprise friction alone or a clip to prevent handle 204 from moving in response to pressure applied to the guard when in its in use position. Thus various locking arrangements may be applicable and thus it will be understood by those skilled in art that the invention is not to be construed as limited to any particular locking arrangement. Whatever form of locking means is utilized the locking means is suitably configured to be automatically deactivated in the event that the vehicle is crashed. By configuring the locking means in this way an extra safety feature is provided in that should the vehicle crash then an authorized user of the vehicle is effectively not trapped inside the vehicle by virtue of security guards being in their in use position. This latter point is particularly pertinent to embodiments wherein the security guards are configured for use whilst the vehicle is in motion, such as for example usage of such guards in police vehicles during riots etc.

In accordance with the present invention the security panel is configured to operate in accordance with a sensor such that the sensor is arranged to prevent further movement of the security panel when the panel is returning to its in use position. In this way, the sensor is configured to detect the presence of an object obstructing the window orifice. In particular, an object which may cause obstruction, could be a person's hand for example and thus the sensor arrangement is incorporated to prevent injury to authorized users etc. of the vehicle. Furthermore, in accordance with the present invention, the security panel is configured to be deactivated (i.e. removed from its in use position to its out of use position) in the event that the vehicle is crashed. For a security panel configured to move in a substantially vertical direction deactivation means of this kind may comprise a sensor arranged to detect the impact of the vehicle crashing, the sensor being arranged to activate means for automatically lowering the vehicle window security panel. Sensor arrangements coupled with window lowering means are known for certain makes of vehicles and technology of this kind is considered to be readily adaptable for use in accordance with the present invention.

The invention is considered to be particularly suitable for use with vehicles that are parked for a short period of time, a long period of time or both short and long periods. However the invention is not to be construed as limited to parked vehicles, the invention possibly having applications for moving vehicles. Thus in the case of moving vehicles such as police or military vehicles for example, the invention comprising a vehicle window security panel may provide additional protection for the vehicles occupants during riot situations etc. For applications' comprising the use of a vehicle window security panel solely for a parked vehicle, an additional desirable feature may include the vehicle ignition system comprising a sensor, such that when the ignition is switched on the vehicle's window security panel is effectively locked into its out of use position. In this way it may thus be ensured that the vehicle occupants are not effectively locked inside the vehicle, this being particularity undesirable should the vehicle be involved in a road crash for example. For applications where the vehicle is in motion, sensors may be incorporated to prevent a vehicle window security guard being placed in its in use position when the vehicle is being operated above a predetermined upper speed limit. Such a safe speed limit may be determined by vehicle manufacturers performing experiments with respect to the magnitude of an impact that vehicle doors can experience without the doors and windows jamming. For more luxurious type cars a safe speed limit is known to be approximately 30 - 40 mph. Thus providing an arrangement to prevent use of a vehicle window security panel above 30 mph for example ensures that none of the vehicle's occupants are effectively trapped inside the vehicle in the event of a crash. Incorporation of a safety system of this kind prevents the vehicle's occupants from being trapped inside the vehicle or at least renders the vehicle window orifices as an appropriate means of escape from the vehicle. The exact mechanism and sensor sensitivity incorporated in systems of this kind will depend on the particular specification of the vehicle doors etc. Thus the impact resistance of vehicle doors is known to vary between makes and models of vehicles and thus a given vehicle manufacturer will be required to determine the arrangement and sensitivity of vehicle sensors with respect to their particular products.

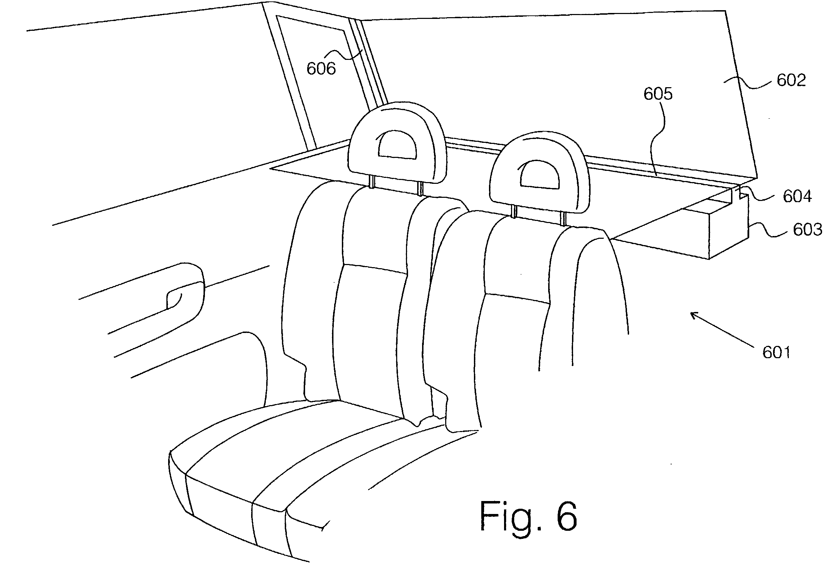

Fig. 6 schematically illustrates an alternative embodiment of a vehicle window security guard apparatus suitable for effecting placement of a vehicle window security guard over either a front windscreen or a rear window of a vehicle. Vehicle window security guard apparatus 601 is configured to effect placement of a vehicle window security guard panel over rear window 602. Apparatus 601 comprises a storage facility 603 for storing a roller shutter device substantially of the type commonly used for protecting windows of domestic and commercial premises. Thus container 603, in the embodiment illustrated, is located behind the rear seats of a given vehicle such as a car for example. Container 603 may be located directly behind the head rests of the rear seats or possibly in the boot of the car. The roller shutter mechanism is preferably motorized and therefore operable electrically in response to commands performed by an operator by suitable switching mechanisms. The roller shutter is forced out of container 603 through outlet 604, outlet 604 substantially being a groove 605 extending along a line parallel to window 602. The roller shutter is guided in a direction parallel with window 602 by virtue of side groove 606 located in the vehicle wall which is substantially transverse to window 602. A similar groove to that identified at 606 is configured on the opposite side of the vehicle so as to effect the required guidance of the roller shutter when either being placed into its in use position or returned to its stored position. Roller shutter container 603 may alternatively be located on the ceiling of the vehicle. In this latter embodiment the roller shutter extending in a downwards direction along the identified grooves when being placed into its in use position and extending in an upwards direction when being returned to its stored position.

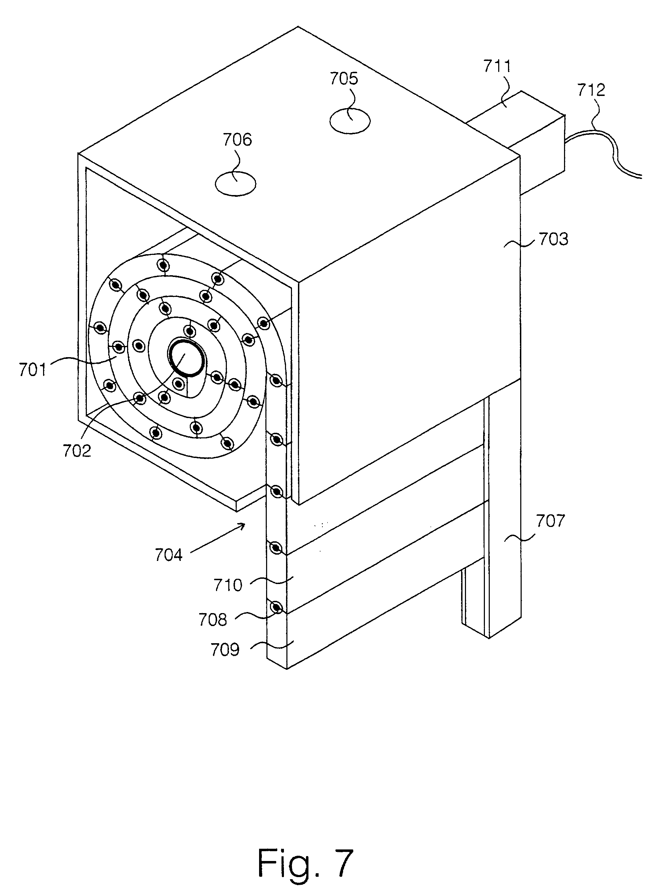

The roller shutter container and roller shutter contained therein identified in Fig. 6, are further detailed in Fig. 7, the figure representing a cross section through container 603. A roller shutter 701 is preferably configurable to be wrapped around a central axis 702 to facilitate storage of the panel. The roller shutter 701 is stored in container 703, container 703 substantially being a box-like structure having a single opening 704 for enabling the roller shutter 701 to be placed in its in use position or returned to its stored position. Container 703 may be bolted to the vehicle by virtue of attachment means 705 and 706, the attachment means substantially being configured as a pair of holes for enabling insertion of fastening bolts. Roller shutter 701 is guided by guiding means 707 which may form part of the roller shutter mechanism or alternatively as identified earlier may be formed by suitable grooves configured in the walls of the vehicle. The roller shutter 701 may be configured in a variety of ways, such as for example a series of strengthened rods inter-linked by interconnecting means. However, in the preferred embodiment roller shutter 701 comprises narrow width panels held in place with respect to one another by moveable joints such as joint 708. Joint 708 may comprise a bolt arrangement so as to link neighbouring panels such as panel 709 and 710 whilst maintaining a degree of flexibility between the respective panels so as facilitate storage of the roller shutter device within container 703. Roller shutter 701 may be configured to be deployed from and returned to container 703 by either manual means or automatic means depending upon customer and manufacturer requirements. In the embodiment shown in Fig. 7 the shutter is configured to be deployed and returned using automatic means. Thus electric motor 711, configured to effect motion of central axis 702 and powered by a vehicle on board battery via leads 712, effects motion of the shutter in response to an authorised user of the vehicle pressing an appropriately configured switch. An alternative embodiment may comprise shutter 701 being manually wound into and out of container 703 by use of a handle attached to central axis 702.

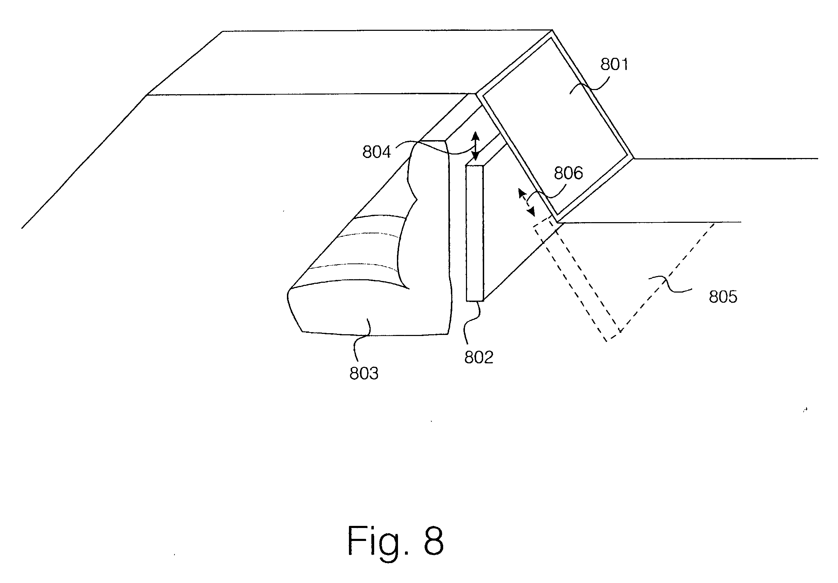

Fig. 8 schematically illustrates two further embodiments of a vehicle window security guard apparatus suitable for protecting a rear window of a car for example. In a first embodiment, rear window 801 may be protected by a panel 802 configured to be raised or lowered substantially vertically behind a rear seat 803. The raising and lowering motion is indicated by double-headed vertical arrow 804. Alternatively, as illustrated by broken lines, a panel 805 may be configured to lie in a plane substantially parallel to rear window 801. In the latter embodiment, raising and lowering of panel 805 is thus substantially parallel to window 801 as is indicated by double headed arrow 806.

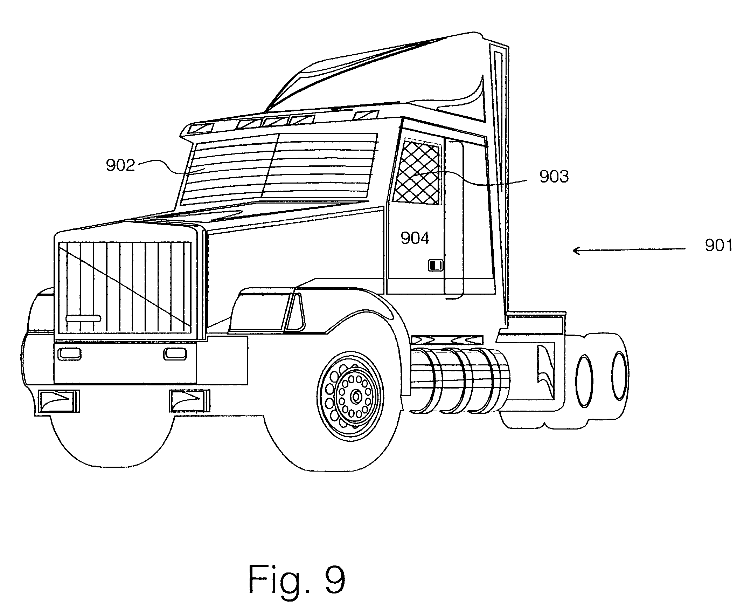

The invention is not to be considered to be restricted to any particular type of vehicle, but is considered to be particularly suitable to land vehicles such as cars, vans and lorries. The invention may thus be utilized in a wide variety of vehicles such as cars, lorries, vans, boats, public transport vehicles, taxis, military vehicles, police vehicles, caravans, etc. Fig. 9 schematically illustrates a vehicle window security guard apparatus for use in protecting windows of a lorry truck 901. Thus the front windscreen of the lorry truck may be protected by a vehicle window security guard 902 configured in a way substantially similar to that identified in Fig. 6 and 7 in accordance with the roller shutter principle. Similarly, a side window of lorry truck 901 may be protected by a vehicle window security panel 903 configured for use in lorry truck door 904. Security guard 903 may be configured in accordance with any of the previously identified embodiments of a vehicle window security apparatus, but is considered to be most easily implemented in a manner substantially similar to that identified in Figs. 2 to 5. Finally it is to be construed that a roller shutter of the type identified in Fig. 7 may comprise narrow elongate panels made of a mesh/polycarbonate based plastic arrangement of the type described above for a single rigid panel.

The use of a mesh based security panel as described may additionally be designed so as to improve its aesthetic appeal. This is particularly important for applications of the present invention in automobiles such as luxury class cars. Thus for example the security panel and/or the mesh itself may be encased in a suitable wood (e.g. mahogany). For use on military and police vehicles and the like a further preference may include utilising a panel having the property of being substantially bulletproof. Yet a further preference may include protecting the panel from "scuffing" over a long period of time by encasing the plastics based substrate in a glass, polyester scuff resistant plastics material, etc.

A further improvement which a given manufacturer of a given vehicle may wish to incorporate includes a sensing mechanism to detect the presence of people in a given vehicle upon which the apparatus in accordance with the present invention is incorporated. A mechanism of this kind may be able to prevent a criminal trapping a person in such a protected vehicle. Technology considered to be suitable for implementing such a mechanism may comprise an infra-red (I R) or ultrasonic ray that detects people inside. A mechanism of this kind may only be applicable to a parked vehicle and in any event would not be suitable for a vehicle in motion unless the mechanism was effectively switched off during the period of motion. Further safety features in this respect could include weight sensors located in the seats of the vehicle to detect the presence of occupants by virtue of exerted pressure. Such sensors may be operable independently or in conjunction with the radiation sensors above.

In relation to mechanisms for activating the security guards of the present invention the following are realisable: manual means; infra-red/electronic means and radio/electronic means. Thus, the guards may be electrically lowered and raised in response to a personalised signal activated from a hand held key fob as is known in the art of "central locking" technology for example.

It is important to note that an important advantage of the present invention over certain other kinds of vehicle window security guard system is that the invention allows a given vehicles doors to be opened when the vehicle windows are in a guarded state. Additionally, the security guard apparatus configured in accordance with the present invention is configured to operate independently of any associated window movement mechanisms. This latter feature relating particularly to windows associated with doors of land vehicles.

A further feature which could readily be accommodated in the embodiment using a metal mesh based panel is the electrical connection of the security panels of a suitably fitted vehicle to a tracker system such that upon a given panel mesh being cut the vehicle tracker transmits a signal which may be tracked by the police or vehicle owner. Similarly, mechanisms to alert criminals to the presence of the invention on a vehicle may help deter further interference - for example incorporation of an LED light with a characterising symbol.

In the interests of ensuring safety in respect of the electromechanical embodiment of the present invention being incorporated into a given vehicle not requiring shielding during movement, a further preferred feature includes a sensor mechanism to prevent accidental activation (AA) of the apparatus so that the panels are not accidentally placed into position. In this way the panels are prevented from trapping passengers in the vehicle in circumstances of electrical failure or accidental inducement of an activation signal such as may possibly arise if the vehicle was accidentally submerged in water for example. Various solutions may be applicable to solve this particular problem, but in the preferred embodiment a mechanism to break the electrical circuit and which is configured to raise the panels in such circumstances may be incorporated so as to prevent such an accidental activation signal being responded to. Such a system may include use of a switch, sensor or microchip control assembly. Other safety features may include a hand activated release mechanism located with the passenger portion of the vehicle wherein an occupant may press a suitably positioned button so as to deactivate the locking mechanism holding the panels in place. This may be configured to be operable only when the vehicle ignition key is in the ignition so as to prevent criminals from attempting to activate the button through a sunroof for example. However, implemented in full on a given vehicle the invention is also equally suitable to protect against unauthorised access through a sunroof aperture or any other such similar aperture on a given vehicle.

Yet a further feature to help prevent AA may be the incorporation of a sensor associated with a given window aperture so as to detect whether the movement of a panel into its in use position is accidental or intended.

With all of the electrically operable safety mechanisms described herein it is preferred that a high level of waterproofing is incorporated throughout so as to reduce risks such as accidental activation of the security panels into their in use position.

## Claims

1. A vehicle window security guard apparatus configurable to protect against unauthorised access to a vehicle (101) through a window aperture that is associated with a window, said apparatus being located in a vehicle body and said apparatus comprising:
a reinforced panel (102) for positioning adjacent to said window aperture when said panel is in use, said panel being substantially independent of, and moveable relative to, said window;
concealed storage means (203) configured to store and substantially conceal said panel within a substantially fixed and pre-determined location within said vehicle body when said panel is not in use;
locking means for maintaining said panel in said in-use position when said panel is in use;
panel movement and guide means (202, 204; 501-521) for effecting a substantially pre-determined path of movement of said panel from said storage means to said in use position and vice-versa, said panel movement and guide means enabling said panel to be moved independently of said window; and
means (202, 204; 501 - 521) configured to substantially store and conceal said panel movement means in substantially the same location within said vehicle body as said panel storage means;
said apparatus being **characterised by** further comprising:
a sensor configured to detect the presence of an object obstructing the closure of said panel and thereby prevent further movement of said security panel when said panel is returning to its in use position; and
a crash sensor configured to automatically deactivate said locking means in the event that said vehicle is crashed.

2. A vehicle window security guard apparatus according to Claim 1, wherein said panel movement and guide means and said locking means operate substantially automatically through electromechanical mechanisms invoked by an operator.

3. A vehicle window security guard apparatus according to Claim 2, wherein said invocation by said operator comprises use of a transmitted radiation signal.

4. A vehicle window security guard apparatus according to Claim 1 or Claim 2, wherein said panel movement and guide means and said locking means may operate through manual actions of an operator in respect of movement of a handle.

5. A vehicle window security guard apparatus according to Claim 1 wherein said movement and guide means comprises a system utilising a plurality of cogs connected by a chain, said panel being held by a plurality of slider devices attached to said chain.

6. A vehicle window security guard apparatus according to Claim 1, wherein said panel storage means and said panel movement and guide means are substantially located within the body paneling of said vehicle.

7. A vehicle window security guard apparatus according to any preceding claim, wherein said apparatus is substantially located in a door of said vehicle and said panel is configured to protect a window aperture of said door.

8. A vehicle window security guard apparatus according to Claim 7, wherein said apparatus, when in use with said panel protecting said aperture, enables said door to be opened by an authorised user of said vehicle.

9. A vehicle window security guard apparatus according to Claim 1, wherein said apparatus comprises electrical means configured to deactivate the apparatus and render said panel in its out of use position.

10. A vehicle window security guard apparatus according to any preceding claim, wherein said apparatus comprises a sensor to detect the presence of people in said vehicle, a said detection effectively deactivating said apparatus.

11. A vehicle window security guard apparatus according to any of Claims 1, 5, 7, 8, or 9, wherein said panel is substantially transparent.

12. A vehicle window security guard apparatus according to any preceding claim, wherein said panel comprises:
a substantially impact resistant plastics based substrate; and
a metallic mesh bonded to said plastics based substrate.

13. A vehicle window security guard apparatus according to Claim 12, wherein said plastics based substrate is made of a polycarbonate based plastics material.

14. A vehicle window security guard apparatus according to any of Claims 1, 5, 7, 8, 9, 11, 12 or 13 wherein said panel comprises a plurality of linked panels.

15. A vehicle window security guard apparatus according to Claim 14, wherein said panel is configurable to be wrapped around a central access to facilitate storage of said panel.

16. A vehicle window security guard apparatus according to Claim 1, wherein said panel concealed storage means comprises a groove and said movement of said panel is in a plane substantially parallel with the plane of said window.

17. A vehicle window security guard apparatus according to any preceding claim, wherein said apparatus comprises sensing apparatus configured to activate said apparatus through receiving a personalised radiation signal.

18. A vehicle window security apparatus according to claim 1, wherein said apparatus additionally comprises a sensor mechanism configured to prevent accidental activation (AA).

## Patentansprüche

1. Konfigurierbare Fahrzeugfenster-Schutzvorrichtung zum Schutz gegen unbefugten Zugang zu einem Fahrzeug (101) durch eine Fensteröffnung, die mit einem Fenster assoziiert ist, wobei sich besagte Vorrichtung in einer Fahrzeugkarosserie befindet und besagte Vorrichtung umfasst:
eine verstärkte Platte (102) zum Positionieren angrenzend an besagte Fensteröffnung, wenn besagte Platte nicht in Gebrauch ist, wobei besagte Platte im Wesentlichen von besagtem Fenster unabhängig und relativ dazu beweglich ist;
verborgenes Lagerungsmittel (203), das konfiguriert ist besagte Platte an einer im Wesentlichen festen und vorbestimmten Stelle in besagter Fahrzeugkarosserie zu lagern und im Wesentlichen zu verbergen, wenn besagte Platte nicht in Gebrauch ist;
Verriegelungsmittel zum Beibehalten besagter Platte in besagter Einsatzposition, wenn besagte Platte in Gebrauch ist;
Plattenbewegungs- und Führungsmittel (202, 204; 501-521) zur Ausführung eines im Wesentlichen vorbestimmten Bewegungswegs der besagten Platte aus besagtem Lagerungsmittel in die besagte Einsatzposition und umgekehrt, wobei besagte Plattenbewegungs- und Führungsmittel ermöglichen besagte Platte unabhängig von besagtem Fenster zu bewegen; und
Mittel (202, 204; 501 - 521), die konfiguriert sind besagte Plattenbewegungsmittel, im Wesentlichen an der gleichen Stelle in besagter Fahrzeugkarosserie wie besagte Plattenlagerungsmittel, im Wesentlichen zu lagern und zu verbergen;
besagte Vorrichtung **dadurch gekennzeichnet ist, dass** sie weiter umfasst:
einen Sensor, der konfiguriert ist die Anwesenheit eines Objekts zu erkennen, das das Schließen der besagten Platte behindert und dadurch weitere Bewegung der besagten Sicherheitsplatte verhindert, wenn besagte Platte in ihre Einsatzposition zurückkehrt; und
einen Crash-Sensor, der konfiguriert ist besagtes Verriegelungsmittel automatisch zu deaktivieren für den Fall, dass besagtes Fahrzeug aufprallt.

2. Fahrzeugfenster-Schutzvorrichtung nach Anspruch 1, worin besagtes Plattenbewegungs- und Führungsmittel und besagtes Verriegelungsmittel im Wesentlichen automatisch durch elektromechanische Mechanismen arbeiten, die von einem Bediener aufgerufen werden.

3. Fahrzeugfenster-Schutzvorrichtung nach Anspruch 2, worin besagter Aufruf durch besagten Bediener den Einsatz eines übertragenen Strahlungssignals umfasst.

4. Fahrzeugsfenster-Schutzvorrichtung nach Anspruch 1 oder Anspruch 2, worin besagtes Plattenbewegungs- und Führungsmittel und besagtes Verriegelungsmittel durch manuelle Handlungen eines Bedieners in Bezug auf Bewegen eines Griffs arbeiten können.

5. Fahrzeugfenster-Schutzvorrichtung nach Anspruch 1, worin besagtes Bewegungs- und Führungsmittel ein System umfasst, das eine Vielheit durch eine Kette verbundener Zahnräder benutzt, wobei besagte Platte durch eine Vielheit von Schiebervorrichtungen gehalten wird, die an besagter Kette befestigt sind.

6. Fahrzeugfenster-Schutzvorrichtung nach Anspruch 1, worin sich besagtes Plattenlagerungsmittel und besagtes Plattenbewegungs- und Führungsmittel im Wesentlichen innerhalb der Karosserieverkleidung des besagten Fahrzeugs befinden.

7. Fahrzeugfenster-Schutzvorrichtung nach einem beliebigen vorhergehenden Anspruch, worin sich besagte Vorrichtung im Wesentlichen in einer Tür des besagten Fahrzeugs befindet und besagte Platte konfiguriert ist eine Fensteröffnung besagter Tür zu schützen.

8. Fahrzeugfenster-Schutzvorrichtung nach Anspruch 7, worin besagte Vorrichtung, wenn mit besagter, die besagte Öffnung schützenden Platte in Gebrauch, das Öffnen besagter Tür durch einen autorisierten Benutzer des besagten Fahrzeugs ermöglicht.

9. Fahrzeugfenster-Schutzvorrichtung nach Anspruch 1, worin besagte Vorrichtung elektrische Mittel umfasst, die konfiguriert sind die Vorrichtung zu deaktivieren und besagte Platte wieder in ihre außer Gebrauchsstellung zu setzen.

10. Fahrzeugfenster-Schutzvorrichtung nach einem beliebigen vorhergehenden Anspruch, worin besagte Vorrichtung einen Sensor aufweist, um die Anwesenheit von Personen im besagten Fahrzeug zu erkennen, wobei ein besagtes Erkennen besagte Vorrichtung effektiv deaktiviert.

11. Fahrzeugfenster-Schutzvorrichtung nach einem beliebigen der Ansprüche 1, 5, 7, 8, oder 9, worin besagte Platte im Wesentlichen transparent ist.

12. Fahrzeugfenster-Schutzvorrichtung nach einem beliebigen vorhergehenden Anspruch, worin besagte Platte aus folgendem besteht:
einem im Wesentlichen schlagfesten Substrat auf Kunststoffbasis; und
einem Metallmaschenwerk, das an besagtes Substrat auf Kunststoffbasis geklebt ist.

13. Fahrzeugfenster-Schutzvorrichtung nach Anspruch 12, worin besagtes Substrat auf Kunststoffbasis aus einem Kunststoffmaterial auf Polycarbonatbasis hergestellt ist.

14. Fahrzeugfenster-Schutzvorrichtung nach einem beliebigen der Ansprüche 1, 5, 7, 8, 9, 11, 12 oder 13 worin besagte Platte eine Vielheit gekuppelter Platten umfasst.

15. Fahrzeugfenster-Schutzvorrichtung nach Anspruch 14, worin besagte Platte konfigurierbar um einen zentralen Zugang herumgezogen zu werden, um Lagerung besagter Platte zu erleichtern.

16. Fahrzeugfenster-Schutzvorrichtung nach Anspruch 1, worin das Mittel für verborgene Lagerung der Platte eine Nut umfasst und besagte Bewegung der Platte in einer Ebene geschieht, die im Wesentlichen mit der Ebene des besagten Fensters parallel ist.

17. Fahrzeugfenster-Schutzvorrichtung nach einem beliebigen vorhergehenden Anspruch, worin besagte Vorrichtung eine Messfühlervorrichtung umfasst, die konfiguriert ist besagte Vorrichtung durch Empfangen eines anwenderspezifischen Strahlungssignals zu aktivieren.

18. Fahrzeugfenster-Schutzvorrichtung nach Anspruch 1, worin besagte Vorrichtung zusätzlich einen Sensormechanismus umfasst, der konfiguriert ist zufällige Aktivierung (AA) zu verhindern.

## Revendications

1. Dispositif de sécurité pour fenêtre de véhicule configurable de manière à assurer la protection contre l'accès non autorisé à un véhicule (101) à travers une ouverture de fenêtre qui est associée à une fenêtre, ce dispositif étant placé dans la carrosserie du véhicule et comprenant:
un panneau renforcé (102) qui sera positionné à côté de l'ouverture de fenêtre lorsque le panneau est utilisé, ce panneau étant essentiellement indépendant de la fenêtre et mobile par rapport à cette fenêtre;
des moyens de rangement dissimulés (203) configurés de manière à ranger et en grande partie dissimuler le panneau dans un emplacement essentiellement fixe et prédéterminé à l'intérieur de la carrosserie du véhicule lorsque le panneau n'est pas utilisé;
des moyens de verrouillage servant à garder le panneau dans la position d'utilisation lorsque le panneau est utilisé;
des moyens de déplacement et de guidage du panneau (202, 204; 501-521) donnant un chemin de déplacement essentiellement prédéterminé pour le panneau depuis les moyens de rangement jusqu'à la position d'utilisation et aussi dans l'autre sens, ces moyens de déplacement et de guidage du panneau permettant de déplacer le panneau indépendamment de la fenêtre; et
des moyens (202, 204; 501-521) configurés de manière à ranger et dissimuler en grande partie les moyens de déplacement du panneau essentiellement dans le même emplacement que les moyens de rangement du panneau à l'intérieur de la carrosserie du véhicule;
le dispositif de sécurité étant **caractérisé en ce qu'**il comprend par ailleurs:
un détecteur configuré de manière à détecter la présence d'un objet entravant la fermeture du panneau et, par conséquent, tout déplacement ultérieur du panneau de sécurité lorsque celui-ci retourne vers sa position d'utilisation; et
un détecteur de collision configuré de manière à désactiver automatiquement les moyens de verrouillage en cas de collision du véhicule.

2. Dispositif de sécurité pour fenêtre de véhicule, selon la revendication 1, **caractérisé en ce que** les moyens de déplacement et de guidage du panneau et les moyens de verrouillage fonctionnent de manière essentiellement automatique par l'intermédiaire de mécanismes électromécaniques mis en oeuvre par un opérateur.

3. Dispositif de sécurité pour fenêtre de véhicule, selon la revendication 2, **caractérisé en ce que** la mise en oeuvre par l'opérateur entraîne la transmission d'un signal rayonné.

4. Dispositif de sécurité pour fenêtre de véhicule, selon la revendication 1 ou la revendication 2, **caractérisé en ce que** les moyens de déplacement et de guidage du panneau et les moyens de verrouillage peuvent être mis en oeuvre manuellement par un opérateur qui se servira d'une poignée à cet effet.

5. Dispositif de sécurité pour fenêtre de véhicule, selon la revendication 1, **caractérisé en ce que** les moyens de déplacement et de guidage du panneau comprennent un système utilisant une pluralité de roues dentées reliées par une chaîne, le panneau étant tenu par une pluralité de dispositifs à glissière attachés à cette chaîne.

6. Dispositif de sécurité pour fenêtre de véhicule, selon la revendication 1, **caractérisé en ce que** les moyens de rangement du panneau et les moyens de déplacement et de guidage du panneau se trouvent placés essentiellement à l'intérieur des tôles de carrosserie du véhicule.

7. Dispositif de sécurité pour fenêtre de véhicule, selon l'une quelconque des revendications précédentes, **caractérisé en ce que** le dispositif de sécurité se trouve placé essentiellement dans une porte du véhicule, et **en ce que** le panneau est configuré de manière à protéger une ouverture de fenêtre dans la porte.

8. Dispositif de sécurité pour fenêtre de véhicule, selon la revendication 7, **caractérisé en ce que** le dispositif de sécurité, lorsqu'il est utilisé avec le panneau, permet l'ouverture de la porte par un utilisateur autorisé du véhicule.

9. Dispositif de sécurité pour fenêtre de véhicule, selon la revendication 1, **caractérisé en ce que** le dispositif de sécurité comprend des moyens électriques configurés de manière à désactiver le dispositif de sécurité et à déplacer le panneau vers sa position de non utilisation ou bien à le garder dans cette position.

10. Dispositif de sécurité pour fenêtre de véhicule, selon l'une quelconque des revendications précédentes, **caractérisé en ce que** le dispositif de sécurité comprend un détecteur servant à détecter la présence éventuelle de passagers à bord du véhicule et, en cas de détection de passagers, à désactiver effectivement le dispositif de sécurité.

11. Dispositif de sécurité pour fenêtre de véhicule, selon l'une quelconque des revendications 1, 5, 7, 8, ou 9, **caractérisé en ce que** le panneau est essentiellement transparent.

12. Dispositif de sécurité pour fenêtre de véhicule, selon l'une quelconque des revendications précédentes, **caractérisé en ce que** le panneau comprend:
un substrat à base de matière plastique essentiellement résistant à l'impact; et
une maille métallique collée au substrat à base de matière plastique.

13. Dispositif de sécurité pour fenêtre de véhicule, selon la revendication 12, **caractérisé en ce que** le substrat à base de matière plastique est fabriqué en matière plastique à base de polycarbonate.

14. Dispositif de sécurité pour fenêtre de véhicule, selon l'une quelconque des revendications 1, 5, 7, 8, 9, 11, 12 ou 13, **caractérisé en ce que** le panneau est composé d'une pluralité de panneaux joints.

15. Dispositif de sécurité pour fenêtre de véhicule, selon la revendication 14, **caractérisé en ce que** le panneau est configurable de manière à s'enrouler autour d'un point d'accès central, ceci facilitant le rangement du panneau.

16. Dispositif de sécurité pour fenêtre de véhicule, selon la revendication 1, **caractérisé en ce que** les moyens de rangement dissimulés du panneau comprennent une cannelure et **en ce que** le panneau se déplace dans un plan essentiellement parallèle au plan de la fenêtre.

17. Dispositif de sécurité pour fenêtre de véhicule, selon l'une quelconque des revendications précédentes, **caractérisé en ce que** le dispositif de sécurité comprend un appareil de détection configuré de manière à activer le dispositif de sécurité après réception d'un signal rayonné personnalisé qui aura été transmis.

18. Dispositif de sécurité pour fenêtre de véhicule, selon la revendication 1, **caractérisé en ce que** le dispositif de sécurité comprend par ailleurs un mécanisme de détection configuré de manière à empêcher une activation accidentelle (AA).
